# EUROPEAN PATENT APPLICATION

(11) **EP 3 933 617 A1**
(43) Date of publication of application: **05.01.2022**
(21) Application number: 21163945.5
(22) Date of filing: 22.03.2021
(51) Int. Cl.: G06F 16/9035, G06Q 10/06

(54) **METHOD, APPARATUS, DEVICE AND STORAGE MEDIUM FOR CUSTOMIZING PERSONALIZED RULES FOR ENTITIES**

(30) Priority: 29.06.2020 CN 202010605461
(71) Applicant: BEIJING BAIDU NETCOM SCIENCE AND TECHNOLOGY CO. LTD., 100085 Beijing (CN)
(72) Inventor: JI, Kunpeng, BEIJING, 100085 (CN); ZHENG, Canxiang, BEIJING, 100085 (CN)
(74) Representative: Bittner, Bernhard

(57) **Abstract**

A method, apparatus, device and storage medium for customizing personalized rules for entities are disclosed. The method includes: setting corresponding multiple fit conditions for entities which need to be fitted with personalized rules; where each fit condition includes a general law, a personalized parameter, and a corresponding customized action; loading data of multiple first entities corresponding to the multiple fit conditions; and for each first entity, acquiring a corresponding fit condition of the first entity; and extracting, from the data of the first entity, the personalized parameter in the corresponding fit condition, and determining a corresponding customized action according to the extracted personalized parameter and the general law in the corresponding fit condition. In the embodiment of the present application, massive rules may be classified into a small number of general laws, which greatly improves an initialization speed of a rule engine a scene of massive personalized customization.

## Description

### TECHNICAL FIELD

The present application relates to the field of computer technology, in particular to the field of big data and cloud storage.

### BACKGROUND

In some fields, massive personalized rules need to be customized for massive entities, and then corresponding rules may be triggered by a rule engine. The existing open-source rule engine has an upper limit of about 20,000 rules for loading and processing of rules. An excess of rules will lead to slower loading and processing speed, as well as other problems such as a memory of the rule engine overrun. Therefore, it is only adapted to the case where a small number of rules are applied to large-scale groups. For example, in e-commerce, corresponding discount is matched with groups that meet certain consumption conditions.

### SUMMARY

The present application provides a method, apparatus, device and storage medium for customizing personalized laws for entities.

According to one aspect of the present application, there is provided a method for customizing personalized rules for entities, including:
setting corresponding multiple fit conditions for entities which need to be fitted with personalized rules; wherein each fit condition includes a general law, a personalized parameter, and a corresponding customized action;
loading data of multiple first entities corresponding to the multiple fit conditions; and
for each first entity, acquiring a corresponding fit condition of the first entity; and extracting, from the data of the first entity, the personalized parameter in the corresponding fit condition, and determining a corresponding customized action according to the extracted personalized parameter and the general law in the corresponding fit condition

According to another aspect of the present application, there is provided an apparatus for customizing personalized rules for entities, including:
a setting module, configured for setting corresponding multiple fit conditions for entities which need to be fitted with personalized rules; wherein each fit condition includes a general law, a personalized parameter, and a corresponding customized action;
a loading module, configured for loading data of multiple first entities corresponding to the multiple fit conditions; and
a determining module, configured for, for each first entity, acquiring a corresponding fit condition of the first entity; and extracting, from the data of the first entity, the personalized parameter in the corresponding fit condition, and determining a corresponding customized action according to the extracted personalized parameter and the general law in the corresponding fit condition.

According to another aspect of the present application, there is provided an electronic device, including:
at least one processor; and
a memory communicatively connected to the at least one processor; wherein,
the memory stores instructions executable by the at least one processor to enable the at least one processor to implement the method of any embodiment of the present application.

According to another aspect of the present application, there is provided a non-transitory computer-readable storage medium storing computer instructions for causing the computer to perform the method of any one embodiment of the present application.

According to the technical solution of the present application, by means of general operators, rules are classified as general operators (i.e., general laws), thereby supporting massive customized actions (or referred to as personalized actions) for massive entities. In the embodiment of the present application, massive rules are classified into a small number of laws, which greatly improves an initialization speed of a rule engine in a scene of massive personalized customization. In addition, the embodiments of the present application may further support dynamic hot loading, updating and deleting of rules.

It is to be understood that the contents in this section are not intended to identify the key or critical features of the embodiments of the present application, and are not intended to limit the scope of the present application. Other features of the present application will become readily apparent from the following description.

### BRIEF DESCRIPTION OF THE DRAWINGS

The drawings are included to provide a better understanding of the application and are not to be construed as limiting the application. Wherein:
Fig. 1 is an implementation flow chart of a method of applying personalized rules to entities according to an embodiment of the present application;
Fig. 2 is an implementation flow chart of another method of applying personalized rules to entities according to an embodiment of the present application;
Fig. 3 is a schematic diagram showing initialization of a general law and a pre-filtering mechanism according to an embodiment of the application;
Fig. 4 is a schematic diagram of a method of triggering personalized actions of massive users according to an embodiment of the application;
Fig. 5 is a schematic diagram of an apparatus for customizing personalized rules for entities according to an exemplary embodiment of the present application;
Fig. 6 is a schematic diagram of another apparatus for customizing personalized rules for entities according to an exemplary embodiment of the present application; and
Fig. 7 is a block diagram of an electronic device for implementing the method for customizing personalized rules for entities according to an embodiment of the present application.

### DETAILED DESCRIPTION

Reference will now be made in detail to the exemplary embodiments of the present application, examples of which are illustrated in the accompanying drawings, wherein the various details of the embodiments of the present application are included to facilitate understanding and are to be considered as exemplary only. Accordingly, a person skilled in the art should appreciate that various changes and modifications can be made to the embodiments described herein without departing from the scope and spirit of the present application. Also, descriptions of well-known functions and structures are omitted from the following description for clarity and conciseness.

Embodiments of the present application provide a method for customizing personalized rules for entities. By means of general operators, rules are classified as general operators (i.e., general laws), thereby supporting massive customized actions (or referred to as personalized actions) for massive entities. In the embodiment of the present application, massive rules are classified into a small number of laws, which greatly improves an initialization speed of a rule engine in a scene of massive personalized customization. In addition, the embodiments of the present application may further support dynamic hot loading, updating and deleting of rules.

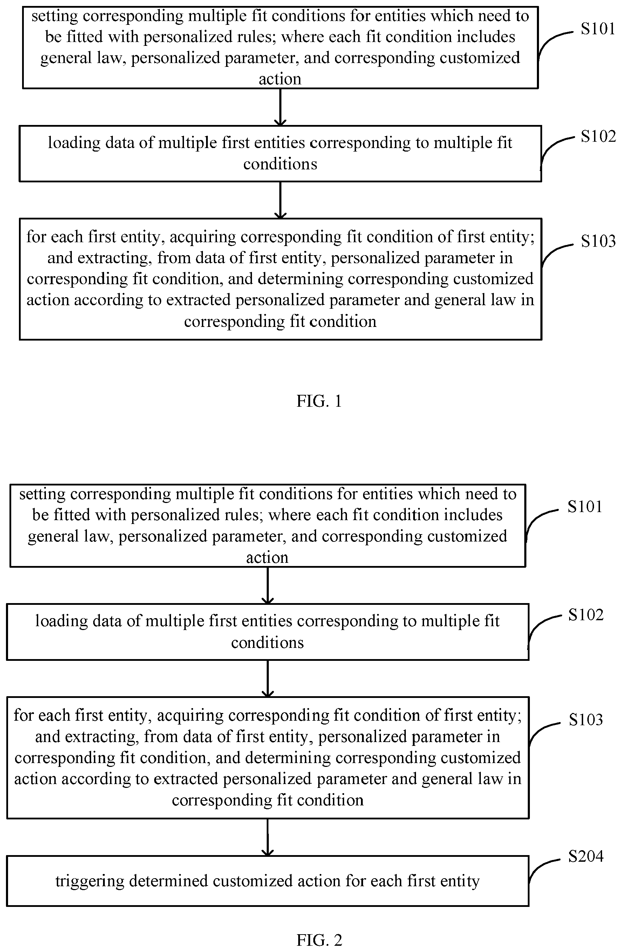

Fig. 1 is an implementation flow chart of a method of applying personalized rules to entities according to an embodiment of the present application. The method includes:
Step S101: setting corresponding multiple fit conditions for entities which need to be fitted with personalized rules; where each fit condition includes a general law, a personalized parameter, and a corresponding customized action;
Step S 102: loading data of multiple first entities corresponding to the multiple fit conditions; and
Step S103: for each first entity, acquiring a corresponding fit condition of the first entity; and extracting, from the data of the first entity, the personalized parameter in the corresponding fit condition, and determining a corresponding customized action according to the extracted personalized parameter and the general law in the corresponding fit condition.

Fig. 2 is an implementation flow chart of another method of applying personalized rules to entities according to an embodiment of the present application. As shown in Fig. 2, optionally, the method further includes: after the above step S103,
Step S204: triggering the determined customized action for each first entity. In this way, customized actions may be applied to massive entities.

In some implementations, an entire design scheme of the embodiment of the application is divided into four parts:
Part 1: initialization of a general law and a pre-filtering mechanism;
Part 2: dynamic loading and updating of the general law and the pre-filtering mechanism;
Part 3: preprocessing of massive data; and
Part 4: rule fitting, triggering massive personalized actions.

The above four parts are described in detail below.

### Regarding the foregoing Part 1:

Optionally, for the entities which need to be fitted with personalized rules, a fit condition (also referred to as Fit for short) is added to the system. The concept of the fit condition may be a collection of domain objects representing a certain type of personalized actions to be applied on a certain type of entities or groups, which stipulates customized actions, fitted general operator names, special personalized parameters that need to be met, etc. that will be adopted for one or more special entities. For example, for the concept of Familiarity Number provided by the telecom operator, in a case that a call (i.e., a general operator) is made among several designated entities (i.e., entities that fit a general law) and a call area and duration meet certain prescribed conditions (i.e., special personalized parameters), telephone charge reduction or exemption (i.e., customized action) are applied to these designated entities.

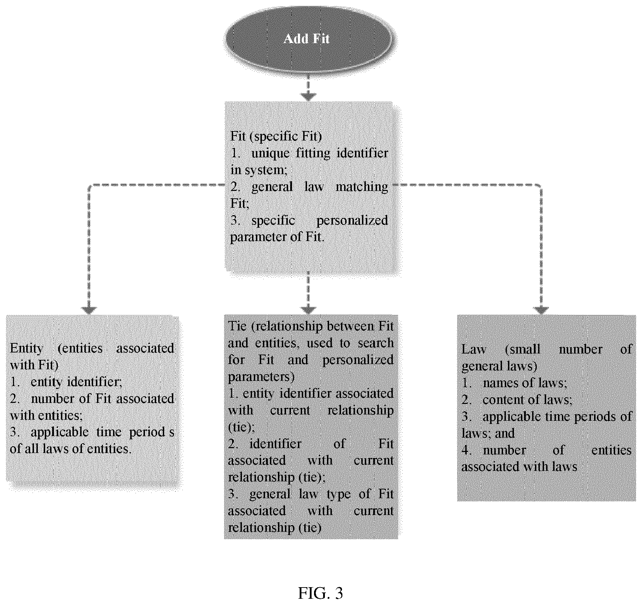

Fig. 3 is a schematic diagram showing initialization of a general law and a pre-filtering mechanism in the method of applying personalized rules to entities according to an embodiment of the application. As shown in Fig. 3, when a specific fit condition is added to a rule engine, a general law type of this fit condition and a specific personalization parameter (used to call general operators in subsequent rule matching, so as to fit a small number of laws for massive personalized actions according to differences between parameters passed in) associated with this fit condition are recorded in a fit model of the rule engine. At the time of adding the fit condition, all entities associated with this fit condition, such as members in a family member list, are also added to the system in sequence (used to quickly filter data later). At the same time, the system further records association relationship between each entity and which specific fit condition each entity is tied to. The association relationship is used for quick interactive query between the fit condition and the entity. Finally, according to a type of the currently added fit condition, such as Familiarity Number discounts, etc., in a case that there is no such rule in the system, such rule is added to the system. In this way, the massive personalized actions of entities and groups are abstracted into a few general laws.

Specifically, as shown in Fig. 3, when one fit condition is added, the system may record the following 4 tables:
Table 1: Fit condition. It includes a unique fitting identifier in the system, a general law matching this fit condition and a specific personalized parameter of this fit condition.
Table 2: Entity (an entity associated with the fit condition). It includes an entity identifier, the number of fit conditions associated with the entity, and applicable time periods of all fit conditions of the entity.
Table 3: Tie (which is relationship between the fit condition and the entity, and is used to search for a fit condition and a personalized parameter). It includes an entity identifier associated with a current relationship, an identifier of a fit condition associated with the current relationship, and a general law type of the fit condition associated with the current relationship.
Table 4: Law (a few general laws). It includes a law name, a law content, an applicable time period of a law, and the number of entities associated with the law.

### Regarding the foregoing Part 2:

In some embodiments, entity data related to the fit condition is loaded into a flash memory for pre-filtering of a data stream. Only filtered data can be further processed by the rule engine. Through filtering, an amount of data processed by the rule engine is greatly reduced, thereby improving a processing efficiency of the system.

At the same time, a small number of rules that need to be processed by the rule engine are loaded into the rule engine, and a certain type of general law is dynamically added or removed from the engine according to subsequent changes in rules of the fit condition.

In actual business, for example, in a case that there is no longer any fit condition associated with Familiarity Number discounts in the system, relevant entities in the flash memory and relevant rules in the engine are dynamically removed from the system, thereby further reducing the data and laws processed by the system, and improving the system efficiency.

In some embodiments, the method further includes: after the above step S101, recording entity data, where the entity data includes at least one of: an identifier of an entity associated with a set fit condition, the number of fit conditions associated with the entity, and applicable time periods of fit conditions of the entity. Optionally, the entity data includes the foregoing Table 2.

Correspondingly, the foregoing step S102 includes: searching the entity data for acquiring identifiers of multiple first entities corresponding to the multiple fit conditions; extracting data of the first entities from data stream according to the identifiers of the first entities. In this way, data of the massive entities can be screened. Only data of entities related to the fit condition is selected, while unnecessary data is filtered out, thereby reducing workload of the rule engine in the subsequent process.

### Regarding the foregoing part 3:

As shown in Fig. 2, in some embodiments, the method for customizing personalized rules for entities according to an embodiment of the present application further includes: after the foregoing step S102,

performing format conversion on loaded data of the first entities, to convert a data format of the data of the first entities into a data format that is able to be processed by the rule engine.

Optionally, in the embodiment of the present application, a pre-defined data transformation rule may be adopted to perform format conversion on the data of the first entities loaded into the flash memory; then the format-converted data is input to the rule engine and then is further processed by the rule engine.

### Regarding the foregoing part 4:

In some embodiments, the method further includes: after the foregoing step S101, recording relationship data between fit conditions and entities, where the relationship data between fit conditions and entities includes an identifier of the entity and an identifier of the corresponding fit condition. Optionally, the relationship data between the fit condition and the entity includes the foregoing Table 3.

Correspondingly, for each first entity, acquiring the corresponding fit condition of the first entity in the foregoing step S103 includes: for each first entity, acquiring an identifier of the first entity; searching relationship data between the fit conditions and entities by using the identifier of the first entity and determining the fit condition corresponding to the identifier of the first entity. The fit condition set for the entity can be quickly found by looking up the table.

In some embodiments, the method further includes: after the foregoing step S101, recording general law data, where the general law data includes at least one of: a name of a general law, a content of the general law, an applicable time period of the general law, and the number of entities associated with the general law. Optionally, the general law data includes the foregoing Table 4.

Correspondingly, the method further includes: after determining the fit condition corresponding to the identifier of the first entity, determining a name of a general law included in the fit condition corresponding to the identifier of the first entity; and searching the general law data by using the name of the general law and acquiring a content of a general law applicable to the first entity at the current moment. The content of the general law applicable to the entity can be quickly acquired by looking up the table and the general law are only applicable at the current moment, thereby reducing an amount of calculation for subsequent operations.

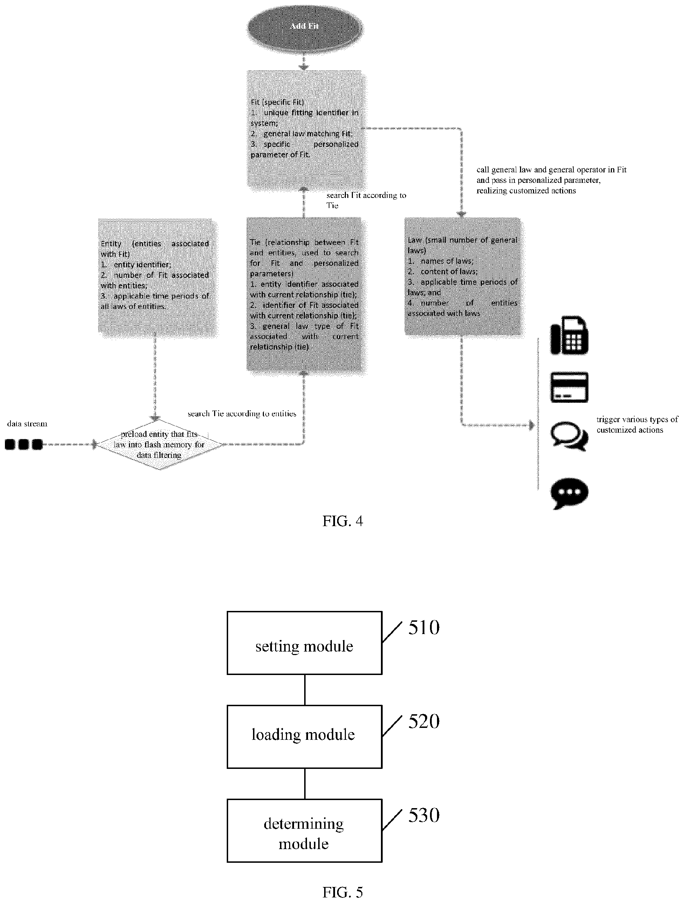

Fig. 4 is a schematic diagram of a method of triggering personalized actions of massive users in a method of applying personalized rules to entities according to an embodiment of the application. As shown in Fig. 4, data stream is first filtered according to the foregoing Table 2, and data of entities that fit the law in the data stream is preloaded into a flash memory. Then, by looking up a relationship table (Tie) according to an entity whose date fits the law, a specific fit condition associated with the entity is found. Then, according to a general operator, a law type (parent-child discount, big promotion discount, etc.) and a personalized parameter recorded in the fit condition, a specified general operator is called in a specific type of law and a personalized parameter is passed in, such that customized actions for massive different entities or groups are triggered as desired.

In summary, the embodiments of the present application provide an overall design scheme for a rule engine that customizes massive personalized actions for massive entities. Personalized actions can be customized for massive different entities or groups without the problem of loading massive rules for massive actions, thereby effectively solving the problems that the current open-source rule engine cannot flexibly customize massive actions for massive entities, the rule loading is time-consuming, and the memory is easy to overrun. The method according to the present application is especially beneficial in the case where massive personalized rules need to be customized.

One embodiment of the present application further provides an apparatus for customizing personalized rules for entities. Fig. 5 is a schematic structural diagram of an apparatus for customizing personalized rules for entities according to an embodiment of the application. The apparatus includes:
a setting module 510, configured for setting corresponding multiple fit conditions for entities which need to be fitted with personalized rules; where each fit condition includes a general law, a personalized parameter, and a corresponding customized action;
a loading module 520, configured for loading data of multiple first entities corresponding to the multiple fit conditions; and
a determining module 530, configured for, for each first entity, acquiring a corresponding fit condition of the first entity; and extracting, from the data of the first entity, the personalized parameter in the corresponding fit condition, and determining the corresponding customized action according to the extracted personalized parameter and the general law in the corresponding fit condition.

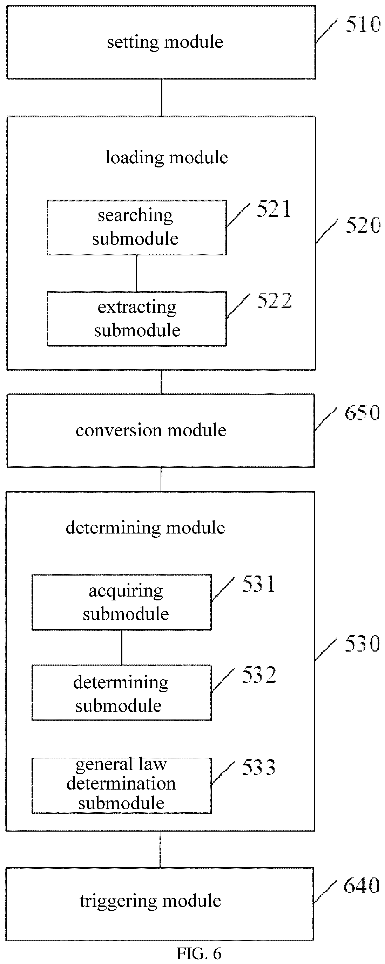

Fig. 6 is a schematic structural diagram of another apparatus for customizing personalized rules for entities according to an embodiment of the application, which includes: a setting module 510, a loading module 520, a determining module 530, and a triggering module 640. The setting module 510, the loading module 520, and the determining module 530 have the same functions as the corresponding modules in Fig. 5.

The trigger module 640 is configured for triggering the determined customized action for each first entity.

In some embodiments, the setting module 510 is further configured for recording entity data, where the entity data includes at least one of: an identifier of an entity associated with a set fit condition, the number of fit conditions associated with the entity, and applicable time periods of fit conditions of the entity.

As shown in Fig. 6, the loading module 520 includes:
a searching submodule 521, configured for searching the entity data for acquiring identifiers of multiple first entities corresponding to the multiple fit conditions;
an extracting submodule 522, configured for extracting data of the first entities from data stream according to the identifiers of the first entities.

The setting module 510 is further configured for recording relationship data between a fit condition and an entity, where the relationship data between the fit condition and the entity includes an identifier of the entity and an identifier of the corresponding fit condition.

In some embodiments, as shown in Fig. 6, the determining module 530 includes:
an acquiring submodule 531, configured for, for each first entity, acquiring an identifier of the first entity; and
a determining submodule 532, configured for searching relationship data between the fit conditions and entities by using the identifier of the first entity and determining the fit condition corresponding to the identifier of the first entity.

In some embodiments, the setting module 510 is further configured for recording general law data, where the general law data includes at least one of: a name of the general law, a content of the general law, an applicable time period of the general law, and the number of entities associated with the general law.

As shown in Fig. 6, the determining module 530 further includes:
a general law determination submodule 533, configured for determining a name of a general law included in the fit condition corresponding to the identifier of the first entity; and searching the general law data by using the name of the general law and acquiring a content of a general law applicable to the first entity at the current moment.

In some embodiments, as shown in Fig. 6, the foregoing apparatus further includes:
a conversion module 650, configured for performing format conversion on loaded data of the first entities, to convert a data format of the data of the first entities into a data format that is able to be processed by the rule engine.

For the functions of the modules in the apparatus in the embodiments of the present application, reference may be made to the corresponding descriptions in the foregoing methods, and details are not described herein again.

According to the embodiments of the present application, the present application further provides an electronic device and a readable storage medium.

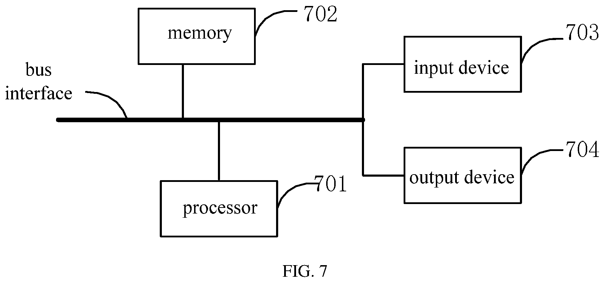

Fig. 7 is a block diagram of an electronic device for realizing the method for customizing personalized rules for entities according to an embodiment of the present application. The electronic device is intended to represent various forms of digital computers, such as laptop computers, desktop computers, workstations, personal digital assistants, servers, blade servers, mainframe computers, and other suitable computers. The electronic device may also represent various forms of mobile devices, such as personal digital processing, cellular telephones, smart phones, wearable devices, and other similar computing devices. The components shown herein, their connections and relationships, and their functions are by way of example only and are not intended to limit the implementations of the present application described and/or claimed herein.

As shown in Fig. 7, the electronic device includes: one or more processors 701, a memory 702, and interfaces for connecting various components, including high-speed interfaces and low-speed interfaces. The various components are interconnected using different buses and may be mounted on a common motherboard or otherwise as desired. The processor may process instructions for execution within the electronic device, including instructions stored in the memory or on the memory to display graphical information of a Graphical User Interface (GUI) on an external input/output device, such as a display device coupled to the interface. In other embodiments, multiple processors and/or multiple buses may be used together with multiple memories if desired. Similarly, multiple electronic devices may be connected, each providing part of the necessary operations (e.g., as an array of servers, a set of blade servers, or a multiprocessor system). In Fig. 7, one processor 701 is taken as an example.

The memory 702 is a non-transitory computer-readable storage medium provided herein. The memory stores instructions executable by at least one processor to enable the at least one processor to implement the method for customizing personalized rules for entities provided herein. The non-transitory computer-readable storage medium of the present application stores computer instructions for enabling a computer to implement the method for customizing personalized rules for entities provided herein.

The memory 702, as a non-transitory computer-readable storage medium, may be used to store non-transitory software programs, non-transitory computer-executable programs, and modules, such as program instructions/modules (e.g., the setting module 510, the loading module 520 and the determining module 530 shown in Fig. 5) corresponding to the method for customizing personalized rules for entities of embodiments of the present application. The processor 701 executes various functional applications of the server and data processing, i.e., to implement the method for customizing personalized rules for entities in the above-mentioned method embodiment, by operating non-transitory software programs, instructions, and modules stored in the memory 702.

The memory 702 may include a program storage area and a data storage area, wherein the program storage area may store the operating system and the application program required by at least one function; the data storage area may store data created according to the use of the electronic device for customizing personalized rules for entities, etc. In addition, the memory 702 may include a high-speed random access memory, and may also include a non-transitory memory, such as at least one magnetic disk storage device, a flash memory device, or other non-transitory solid state memory device. In some embodiments, the memory 702 may optionally include memories remotely located with respect to processor 701, which may be connected via a network to the electronic device for customizing personalized rules for entities. Examples of such networks include, but are not limited to, the Internet, intranet, local area networks, mobile communication networks, and combinations thereof.

The electronic device for realizing the method for customizing personalized rules for entities may further include: an input device 703 and an output device 704. The processor 701, the memory 702, the input device 703, and the output device 704 may be connected via a bus or otherwise. Fig. 7 takes a bus connection as an example.

The input device 703 may receive input numeric or character information and generate key signal inputs related to user settings and functional controls of the electronic device for customizing personalized rules for entities, such as input devices including touch screens, keypads, mice, track pads, touch pads, pointing sticks, one or more mouse buttons, trackballs, joysticks, etc. The output device 704 may include display devices, auxiliary lighting devices (e.g., LEDs), tactile feedback devices (e.g., vibration motors), and the like. The display device may include, but is not limited to, a Liquid Crystal Display (LCD), a Light Emitting Diode (LED) display, and a plasma display. In some embodiments, the display device may be a touch screen.

Various embodiments of the systems and techniques described herein may be implemented in digital electronic circuit systems, integrated circuit systems, Application Specific Integrated Circuits (ASICs), computer hardware, firmware, software, and/or combinations thereof. These various embodiments may include: implementation in one or more computer programs which can be executed and/or interpreted on a programmable system including at least one programmable processor, and the programmable processor may be a dedicated or general-purpose programmable processor which can receive data and instructions from, and transmit data and instructions to, a memory system, at least one input device, and at least one output device.

These computing programs (also referred to as programs, software, software applications, or codes) include machine instructions of a programmable processor, and may be implemented using high-level procedural and/or object-oriented programming languages, and/or assembly/machine languages. As used herein, the terms "machine-readable medium" and "computer-readable medium" refer to any computer program product, apparatus, and/or device (e.g., magnetic disk, optical disk, memory, programmable logic device (PLD)) for providing machine instructions and/or data to a programmable processor, including a machine-readable medium that receives machine instructions as machine-readable signals. The term "machine-readable signal" refers to any signal used to provide machine instructions and/or data to a programmable processor.

To provide an interaction with a user, the systems and techniques described herein may be implemented on a computer having: a display device (e.g., a Cathode Ray Tube (CRT) or Liquid Crystal Display (LCD) monitor) for displaying information to a user; and a keyboard and a pointing device (e.g., a mouse or a trackball) by which a user can provide input to the computer. Other types of devices may also be used to provide interaction with a user; for example, the feedback provided to the user may be any form of sensory feedback (e.g., visual feedback, audile feedback, or tactile feedback); and input from the user may be received in any form, including acoustic input, audio input, or tactile input.

The systems and techniques described herein may be implemented in a computing system that includes a background component (e.g., as a data server), or a computing system that includes a middleware component (e.g., an application server), or a computing system that includes a front-end component (e.g., a user computer having a graphical user interface or a web browser through which a user may interact with embodiments of the systems and techniques described herein), or in a computing system that includes any combination of such background component, middleware component, or front-end component. The components of the system may be interconnected by digital data communication (e.g., a communication network) of any form or medium. Examples of the communication network include: Local Area Networks (LANs), Wide Area Networks (WANs), and the Internet.

The computer system may include a client and a server. The client and the server are typically remote from each other and typically interact through a communication network. A relationship between the client and the server is generated by computer programs operating on respective computers and having a client-server relationship with each other. The server may be a cloud server, also known as a cloud computing server or cloud host. It is a host product in the cloud computing service system to overcome the defects of difficult management and weak business scalability in the traditional physical host and virtual private server (VPS) services.

It will be appreciated that the various forms of flow, reordering, adding or removing steps shown above may be used. For example, the steps recited in the present application may be performed in parallel or sequentially or may be performed in a different order, so long as the desired results of the technical solutions disclosed in the present application can be achieved, and no limitation is made herein.

The above-mentioned embodiments are not to be construed as limiting the scope of the present application. It will be apparent to a person skilled in the art that various modifications, combinations, sub-combinations and substitutions are possible, depending on design requirements and other factors. Any modifications, equivalents, and improvements within the spirit and principles of this application are intended to be included within the scope of the present application.

## Claims

1. A method for customizing personalized rules for entities, comprising:
setting (S101) corresponding multiple fit conditions for entities which need to be fitted with personalized rules; wherein each fit condition comprises a general law, a personalized parameter, and a corresponding customized action;
loading (S102) data of multiple first entities corresponding to the multiple fit conditions; and
for each first entity, acquiring (S103) a corresponding fit condition of the first entity; and extracting, from the data of the first entity, the personalized parameter in the corresponding fit condition, and determining a corresponding customized action according to the extracted personalized parameter and the general law in the corresponding fit condition.

2. The method of claim 1, further comprising: triggering (S204) the determined customized action for each first entity.

3. The method of claim 1 or 2, wherein the method further comprises: after the setting corresponding multiple fit conditions for entities which need to be fitted with personalized rules, recording entity data, wherein the entity data comprises at least one of: an identifier of an entity associated with a set fit condition, the number of fit conditions associated with the entity, and applicable time periods of fit conditions of the entity; and
the loading data of multiple first entities corresponding to the multiple fit conditions, comprises: searching the entity data for acquiring identifiers of multiple first entities corresponding to the multiple fit conditions; extracting data of the first entities from data stream according to the identifiers of the first entities.

4. The method of claim 3, wherein the method further comprises: after the setting corresponding multiple fit conditions for entities which need to be fitted with personalized rules, recording relationship data between fit conditions and entities, wherein the relationship data between fit conditions and entities includes an identifier of the entity and an identifier of a corresponding fit condition; and
for each first entity, acquiring a corresponding fit condition of the first entity, comprises: for each first entity, acquiring an identifier of the first entity; searching the relationship data between fit conditions and entities by using the identifier of the first entity and determining the fit condition corresponding to the identifier of the first entity.

5. The method of claim 4, wherein the method further comprises: after the setting corresponding multiple fit conditions for entities which need to be fitted with personalized rules, recording general law data, wherein the general law data comprises at least one of: a name of a general law, a content of the general law, an applicable time period of the general law, and the number of entities associated with the general law; and
the method further comprises: after the determining the fit condition corresponding to the identifier of the first entity, determining a name of a general law included in the fit condition corresponding to the identifier of the first entity; and searching the general law data by using the name of the general law and acquiring a content of a general law applicable to the first entity at the current moment.

6. The method of any one of claims 1 to 5, wherein the method further comprises: after the loading data of multiple first entities corresponding to the multiple fit conditions,
performing format conversion on loaded data of the first entities, to convert a data format of the data of the first entities into a data format that is able to be processed by a rule engine.

7. An apparatus for customizing personalized rules for entities, comprising:
a setting module (510), configured for setting corresponding multiple fit conditions for entities which need to be fitted with personalized rules; wherein each fit condition comprises a general law, a personalized parameter, and a corresponding customized action;
a loading module (520), configured for loading data of multiple first entities corresponding to the multiple fit conditions; and
a determining module (530), configured for, for each first entity, acquiring a corresponding fit condition of the first entity; and extracting, from the data of the first entity, the personalized parameter in the corresponding fit condition, and determining a corresponding customized action according to the extracted personalized parameter and the general law in the corresponding fit condition.

8. The apparatus of claim 7, further comprising: a triggering module, configured for triggering the determined customized action for each first entity.

9. The apparatus of claim 7 or 8, wherein the setting module is further configured for recording entity data, wherein the entity data comprises at least one of: an identifier of an entity associated with a set fit condition, the number of fit conditions associated with the entity, and applicable time periods of fit conditions of the entity; and
wherein, the loading module comprises:
a searching submodule (521), configured for searching the entity data for acquiring identifiers of multiple first entities corresponding to the multiple fit conditions; and
an extracting submodule (522), configured for extracting data of the first entities from data stream according to the identifiers of the first entities.

10. The apparatus of claim 9, wherein, the setting module is further configured for recording relationship data between fit conditions and entities, wherein the relationship data between fit conditions and entities includes an identifier of the entity and an identifier of a corresponding fit condition; and
the determining module includes:
an acquiring submodule (531), configured for, for each first entity, acquiring an identifier of the first entity;
a determining submodule (532), configured for searching the relationship data between fit conditions and entities by using the identifier of the first entity, and determining the fit condition corresponding to the identifier of the first entity.

11. The apparatus of claim 10, wherein, the setting module is further configured for recording general law data, wherein the general law data comprises at least one of: a name of a general law, a content of the general law, an applicable time period of the general law, and the number of entities associated with the general law; and
the determining module further includes:
a general law determination submodule (533), configured for determining a name of a general law included in the fit condition corresponding to the identifier of the first entity; and searching the general law data by using the name of the general law and acquiring a content of a general law applicable to the first entity at the current moment.

12. The apparatus of any one of claims 7 to 11, further comprising:
a conversion module (650), configured for performing format conversion on loaded data of the first entities, to convert a data format of the data of the first entities into a data format that is able to be processed by a rule engine.

13. An electronic device, comprising:
at least one processor (701); and
a memory (702) communicatively connected to the at least one processor; wherein,
the memory stores instructions executable by the at least one processor to enable the at least one processor to implement the method of any one of claims 1 to 6.

14. A non-transitory computer-readable storage medium storing computer instructions for causing the computer to perform the method of any one of claims 1 to 6.

15. A computer program product comprising computer program instructions, the computer program instructions, when executed by a computer, cause the computer to perform the method according to any one of claims 1 to 6.
